# EUROPEAN PATENT SPECIFICATION

(11) **EP 0 925 205 B1**
(45) Date of publication and mention of the grant of the patent: **21.11.2001**
(21) Application number: 97936906.3
(22) Date of filing: 27.08.1997
(51) Int. Cl.: B60R 9/04

(54) **A RAILING BRACKET**
BEFESTIGUNGSKREMPE FÜR SCHIENE
PATTE DE FIXATION POUR RAIL

(30) Priority: 10.09.1996 SE 9603296
(43) Date of publication of application: 30.06.1999
(73) Proprietor: Industri AB Thule, S-330 33 Hillerstorp (SE)
(72) Inventor: LUNDGREN, Anders, S-510 94 Grimsäs (SE)
(74) Representative: Wallengren, Yngvar
(86) International application number: SE9701414
(87) International publication number: WO9810959

(56) References cited:
- EP-A- 0 487 132
- EP-A- 0 503 305
- WO-A-89/04775
- WO-A-94/21490
- WO-A-96/24509

## Description

### TECHNICAL FIELD

The present invention relates to a railing bracket for securing a load carrier strut, extending transversely over a vehicle roof, in so-called railings disposed along opposing side edge regions of the vehicle roof and in the longitudinal direction of the vehicle, and comprising two clamping jaws reciprocally movable in relation to one another along the load carrier strut under the action of a clamping device, the damping jaws having damping surfaces in engagement with the railing, the damping device being designed for locking the clamping jaws in optional positions along the load carrier strut.

### BACKGROUND ART

A railing bracket of the type mentioned by way of introduction is disclosed in WO94/21490. This railing bracket has two clamping jaws which are displaceable in the longitudinal direction of a load carrier strut both together along the load carrier strut and mutually in relation to one another. Inside the load carrier strut, there is disposed an operating device for the movement and locking of the clamping jaws.

The clamping jaws have mutually facing clamping surfaces for cooperation with a railing bar. These clamping surfaces incline in relation to the normal to the longitudinal direction of the load carrier strut so that the lower ends of the clamping surfaces are located considerably closer to one another than their upper ends. The damping surfaces are substantially straight.

A railing bracket of this type may be employed on railing profiles of varying cross sections, since the aperture which the two clamping surfaces together define is powerfully undercut. However, there is the serious drawback that, if the bracket is applied on a railing profile of slight cross section (e.g. a slim tube), the load carrier strut will be located very close to the upper side of the railing while, on the other hand, the distance will be considerably greater if the bracket is applied on a railing profile of larger cross section.

EP 0 503 305 A1 shows a railing bracket of approximately the same fundamental type as that mentioned by way of introduction. However, this railing bracket is designed in such a manner that it may only be employed together with a single railing profile type.

### PROBLEM STRUCTURE

The present invention has for its object to design the railing bracket intimated by way of introduction such that it will be universally applicable, substantially regardless of the configuration of the cross section of the railing, and also its size. The present invention also has for its object to realise a railing bracket in which the position of the load carrier strut in the vertical direction varies as slightly as possible regardless of the size of the cross sectional configuration of the railing profile. The present invention yet further has for its object to realise a railing bracket which is simple and economical to manufacture and which affords reliable function and simple operation.

### SOLUTION

The objects forming the basis of the present invention will be attained if the construction intimated by way of introduction is characterized by a guide portion which, for its displacement along the load carrier strut, is connected to the damping device, and which has guide surfaces for cooperation with the one clamping jaw so that this is movable transversely of the load carrier strut towards and away from the strut.

Further advantages will be attained according to the present invention if its subject matter is also given one or more of the characterizing features as set forth in appended subclaims 2 to 13.

### BRIEF DESCRIPTION OF THE ACCOMPANYING DRAWINGS

The present invention will now be described in greater detail hereinbelow, with reference to the accompanying Drawings. In the accompanying Drawings:
- Fig.1: is a vertical side elevation of the railing bracket with a portion of a load carrier strut, seen in the longitudinal direction of a vehicle;
- Fig. 2: shows the railing bracket according to Fig. 1, seen from the end of the load carrier strut, the security endpiece of the load carrier strut having however been removed;
- Fig. 3: is a view in the same direction as that of Fig. 1 with a railing profile intimated and the load carrier strut removed;
- Fig. 4: is a view corresponding to that of Fig. 3 in which the railing bar is of circular cross section and slight diameter; and
- Fig. 5: is a view corresponding to that of Fig. 4 in which the railing bar is of circular cross section and with greater diameter.

### DESCRIPTION OF PREFERRED EMBODIMENT

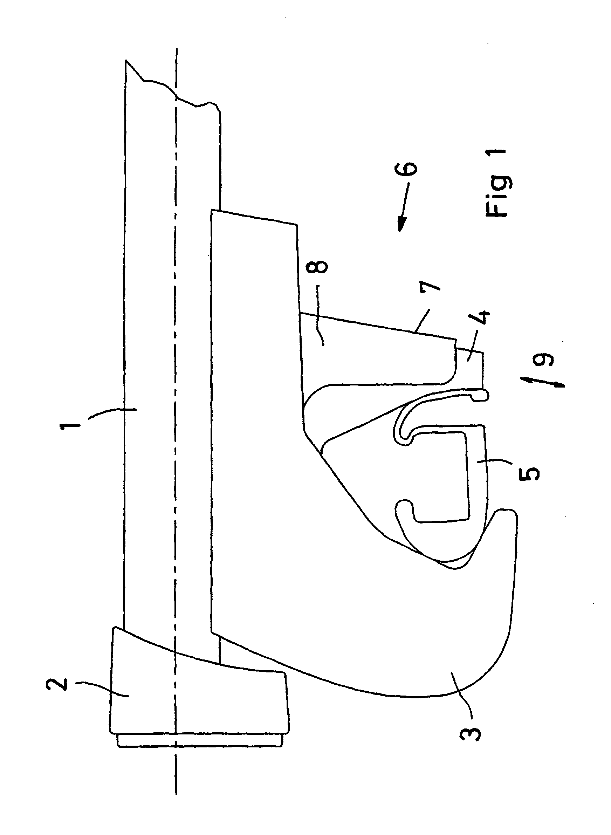

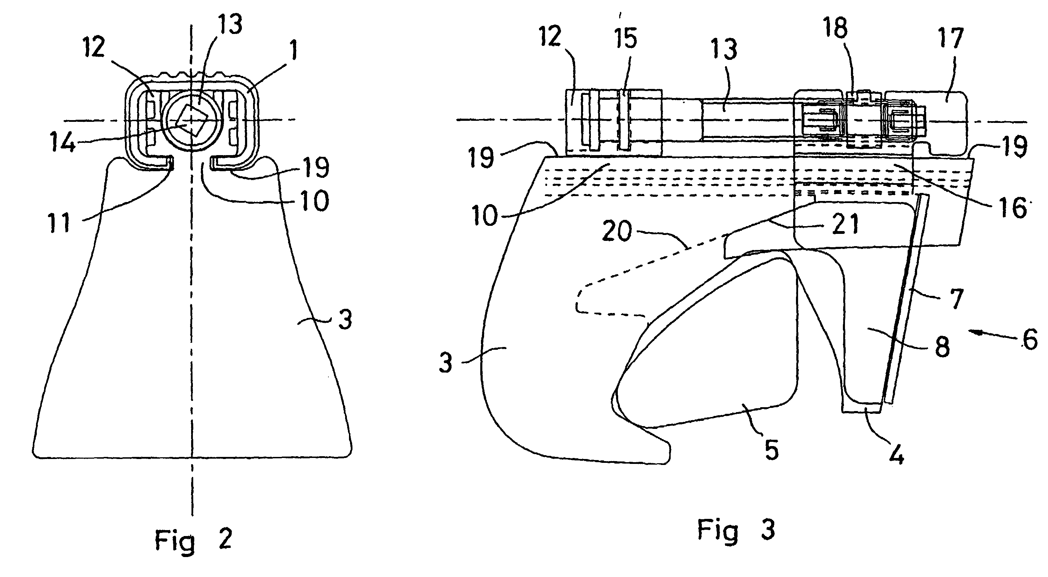

In Fig. 1, reference numeral 1 relates to a load carrier strut which is intended to be secured on railings which are disposed longitudinally at the opposing side edge regions of a vehicle. In such instance, the load carrier strut is transversely directed in relation to the longitudinal direction of the vehicle and extends over the railings and the roof of the vehicle. The load carrier strut 1 has an endpiece 2 which, while not being apparent from the Drawings, may include a lock and also an operating device for operating a clamping device which will be described in greater detail below. The bracket includes two mutually reciprocal clamping jaws 3 and 4, in which the clamping jaw 3 may be considered as the outer clamping jaw, and the clamping jaw 4 as the inner. The clamping jaws are also jointly movable along the load carrier strut 1 and have portions which extend into the load carrier strut via a slot-shaped aperture 11 (see Fig. 2) provided in the underside of the strut. Reference numeral 5 intimates in Fig. 1 the cross-sectional configuration of the longitudinal railing bar, and it will be apparent that this cross-sectional configuration is complicated, has an upwardly open undercut recess, and a cross-sectional configuration which may be described as approximately oval.

The bracket according to Fig. 1 further includes a guide portion 6 which is connected to a clamping device which will be described in greater detail below, and which is located interiorly in the load carrier strut 1. In horizontal section, the guide portion 6 is approximately U-shaped, where the bottom surface of the U forms a support surface 7 for the inner clamping jaw 4. The damping jaw 4 is movable in the vertical direction towards and away from the load carrier strut 1 in a direction which is transverse to the strut but which suitably deviates somewhat from the normal. For this reason, the support surface 7 is somewhat obliquely inclined so that its lower surface is located more distally from the longitudinal centre line of the vehide than its upper end. The inner damping jaw 4 is further guided in the lateral direction (in the longitudinal direction of the vehicle) by being accommodated between the approximately parallel shanks 8 of the U-shaped cross section. The arrow 9 illustrates the two-directional movement capability of the inner damping jaw 4 in relation to the guide portion 6.

Fig. 2 shows the bracket seen in the longitudinal direction of the load carrier strut 1 in towards the longitudinal centre line of the vehicle. It will be apparent from the Figure that the outer clamping jaw 3 has a narrow neck portion 10 which extends through the slot-shaped aperture 11 in the underside of the load carrier strut 1. Above the neck portion 10, the outer clamping jaw 3 has an anchorage 12 for a screw 13 (see also Fig. 3). At its end, the screw 13 has engagement means 14 to be able to be rotated under the action of a suitable torque tool. The engagement means may ideally be designed as a channel extending along the screw and being of non-rotational symmetric cross section. In the Drawing, a square cross section is shown, but this could just as well be, for example, hexagonal. In the embodiment illustrated in Fig. 2, a square rod functions as the torque tool, this being insertable in the aperture and being secured in the endpiece 2 (Fig. 1).

The screw 13 is rotary in relation to the anchorage 12 but is axially fixed therein by having at least one projecting flange 15 which is accommodated in a corresponding groove in the anchorage, the groove being transversely directed in relation to the longitudinal direction of the screw.

It will be apparent from Fig. 3 that the guide portion 6 has a neck portion 16 corresponding to the neck portion 10 of the outer clamping jaw 3. This neck portion 16 also extends up through the slot-shaped aperture 11 in the underside of the load carrier strut 1. Interiorly in the load carrier strut, the guide portion 6 has two registering plates 17 which, in the vertical direction, abut against corresponding defining surfaces in the load carrier strut 1. Hereby, the guide portion 6 will be displaceable in a sliding guide in relation to the load carrier strut 1. The plates 17 also serve as an anchorage for a nut 18 which meshes with the screw 13. The nut is fixed in relation to the plates 17 in the longitudinal direction of the screw and is non-rotatably secured between the two opposing plates.

The anchorage 12, the screw 13, the nut 18 and the two plates 17 may be considered as a damping device whose purpose is to reciprocally displace the two clamping jaws 3 and 4 so that a railing bar 5 may be fixedly damped between them. In the open state, the damping device also allows both of the jaws jointly to be slid in the longitudinal direction of the load carrier strut.

It will jointly be apparent from Figs. 1 and 3 that the outer clamping jaw 3 has, in the longitudinal direction of the load carrier strut 1, a long, upper support surface 19 for the load carrier strut 1. On the other hand, the guide portion 6 has, in the longitudinal direction of the load carrier strut 1, a short contact surface against the load carrier strut On tightening of the damping device this implies that the guide portion 6 will be obliquely inclined somewhat in relation to the load carrier strut and will be clamped against the strut by a "jammed drawer effect". In order to reinforce this damping action, the support portion may, on its upper side, have grooves or projections which improve engagement with the underside of the load carrier strut.

As was mentioned above, the inner damping jaw 4 is movable in the vertical direction in relation to the guide portion 6. In order to realise such vertical movement, the outer clamping jaw 3 has a ramp surface 20 which is intended for cooperation with an obliquely inclined surface 21 on the inner clamping jaw 4. In their cooperation position, the ramp surface 20 and the obliquely inclined surface 21 lie against one another and are parallel. The ramp surface makes an acute angle with the longitudinal direction of the load carrier strut and is located more proximal the load carrier strut at its end facing towards the inner clamping jaw than is the case at its end facing away from the inner clamping jaw. The angle between the ramp surface 20 and the longitudinal direction of the load carrier strut lies in the range of 10 to 35° and may, in one preferred embodiment, be approximately 20°.

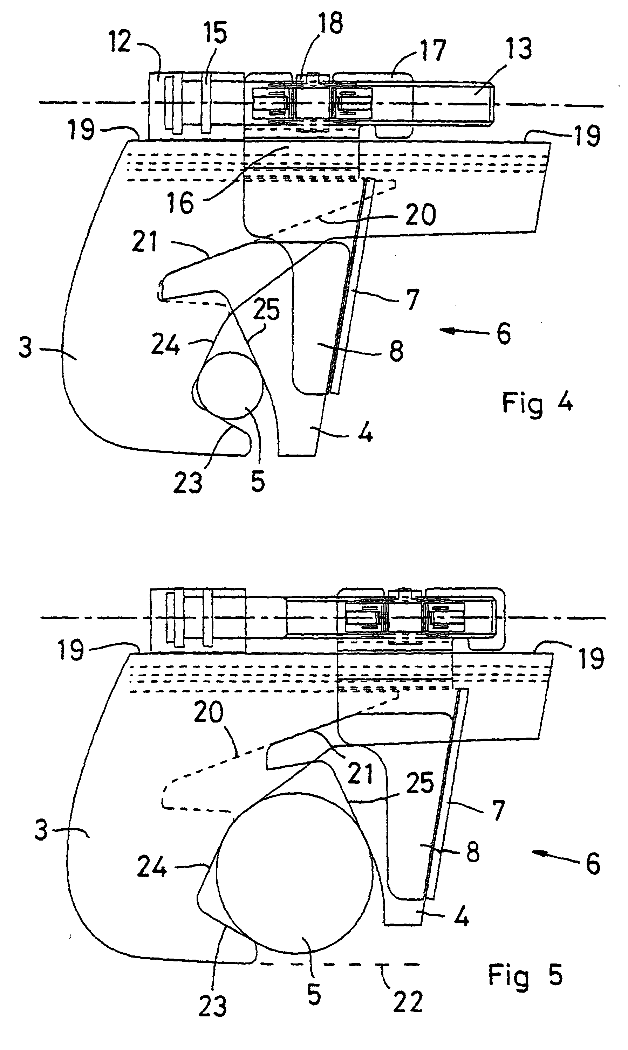

As a result of the above described oblique inclination of the ramp surface 20, the inner clamping jaw 4 will be displaced in a downward direction when the clamping jaws 3 and 4 are moved towards one another. This is clearly illustrated by Figs. 4 and 5 where the bracket is applied on a slim, cylindrical railing in Fig. 4 and a thick, cylindrical railing bar in Fig. 5. In Fig. 4, the lower end of the inner clamping jaw 4 lies in the same vertical position as the lower end of the outer damping jaw 3. On the other hand, in Fig. 5. the inner clamping jaw 4 is located higher than the lower end of the outer damping jaw 3. This is clearly apparent from the broken line 22.

It will be particularly apparent from Figs. 4 and 5 that the two clamping jaws have mutually facing clamping surfaces which, together, form an accommodation space for the railing bar. This accommodation space may be generally described as approximately triangular in cross section, the apex of the triangle being turned to face upwards.

The clamping surface of the outer damping jaw 3 includes a lower portion 23 which serves the function of a base in the above-mentioned triangle. This lower portion makes an acute angle with the longitudinal direction of the load carrier strut so that its inner end is located more distally from the load carrier strut than its outer end. The angle may suitably lie in the range of between 10 and 40°. Further, the clamping surface of the outer clamping jaw 3 has an outer portion 24 which is obliquely inclined in relation to the longitudinal direction of the load carrier strut 1. This oblique inclination is such that the outer portion of the clamping surface has a lower end which is located considerably more distal from the longitudinal centre line of the vehicle than the upper end of the clamping surface. The angle between the outer clamping portion or surface 24 and the longitudinal direction of the load carrier strut may lie in the range of between 40 and 70°. The inner clamping jaw 4 also has a clamping surface 25 which makes an angle with the longitudinal direction of the load carrier strut. The inner clamping surface 25 is obliquely inclined in such a manner that its upper portion is located more distal from a longitudinal centre line of the vehicle than its lower end. The angle between the clamping surface 25 and the longitudinal direction of the load carrier strut may lie in the range of between 40 and 75°.

On the Drawings, the outer portion 24 of the clamping surface of the outer clamping jaw 3 is either arched or divided into different part surfaces which make an angle with one another. In this instance, the upper part surface is "slightly more horizontal" than the lower part surface.

While not being apparent from the Drawings, the guide portion 6 may be provided with a damping device or locking device by means of which the inner clamping jaw 4 may be secured at any optional vertical height in relation to the guide portion.

A further alternative resides in the fact that one of the inner jaw 4 or the guide portion 6 is provided with grooves which are parallel with the support surface 7, while the guide portion or jaw, respectively, has projections which snap into the grooves. The inner jaw 4 is hereby slidable along the guide or support surface 7, at the same time as the inner jaw 4 is interconnected with the guide portion 6.

## Claims

1. A railing bracket for securing a load carrier strut (1), extending transversely over a vehicle roof, to so-called railings (5) disposed along opposing side edge regions of the vehicle roof and in the longitudinal direction of the vehicle, and comprising two clamping jaws (3,4) reciprocally movable in relation to one another along the load carrier strut under the action of a clamping device, the clamping jaws having clamping surfaces (23 - 25) for engagement with the railing (5), the damping device being designed for locking the clamping jaws in optional positions along the load carrier strut, **characterized by** a guide portion (6) which, for its displacement along the load carrier strut (1), is connected to the clamping device, and which has a guide surface (7) for cooperation with the one damping jaw (4) so that this is movable transversely of the load carrier strut (1) towards and away from the strut.

2. The railing bracket, as claimed in Claim 1, **characterized in that** the other clamping jaw (3) has a ramp surface (20) approximately extending in the longitudinal direction of the load carrier strut (1), and making an angle with this longitudinal direction, said ramp surface being disposed for cooperation with the first clamping jaw (4) and displacement thereof transversely of the longitudinal direction of the load carrier strut on mutual relative movement of the clamping jaws in the longitudinal direction of the load carrier strut.

3. The railing bracket as claimed in Claim 2, **characterized in that** the end of the ramp surface (20) facing the first clamping jaw (3) is located more proximal the load carrier strut (1) than its opposite end.

4. The railing bracket as claimed in Claim 2 or 3, **characterized in that** the angle between the ramp surface (20) and the longitudinal direction of the load carrier strut (1) lies in the range of 10-35°.

5. The railing bracket as claimed in Claim 4, **characterized in that** the angle between the ramp surface (20) and the longitudinal direction of the load carrier strut is approximately 20°.

6. The railing bracket as claimed in any of Claims 1 to 5, **characterized in that** the guide portion (6) is, in a horizontal cross section, approximately U-shaped, where the bottom of the U forms a support surface (7) against which the first damping jaw (4) rests and is slidable on tightening of the damping jaws (3 and 4) towards one another.

7. The railing bracket as claimed in Claim 6, **characterized in that** the support surface (7) is somewhat obliquely inclined in relation to a normal to the longitudinal direction of the load carrier strut (1) so that its lower end is located more distal from the longitudinal centre line of the vehicle than its upper end.

8. The railing bracket as claimed in any of Claims 6 or 7, **characterized in that** the first clamping jaw (4) is, by anchorage means, securable to the support surface (7) in an optional position along the length (height) thereof.

9. The railing bracket as claimed in any of Claims 6 to 8, **characterized in that** the guide portion (6) and the first damping jaw (4) have mutually engaging guide means, by which the clamping jaw is slidable along the support surface (7), and the damping jaw and guide portion are interconnected.

10. The railing bracket as claimed in any of Claims 1 to 9, **characterized in that** the clamping device includes a screw (13) which is axially fixed in and rotary in relation to either of the damping jaws (3, 4), and a nut (18) in mesh with the screw, the nut being connected to the remaining clamping jaw (3, 4, respectively).

11. The railing bracket as claimed in Claim 10, **characterized in that** the nut (18) is secured in the guide portion (6).

12. The railing bracket as claimed in any of Claims 1 to 11, **characterized in that** the damping device is disposed interiorly in the load carrier strut.

13. The railing bracket as claimed in Claim 11, **characterized in that** the other clamping jaw (3) and the guide portion (6) have neck portions (10, 16, respectively) which are located in an elongate aperture (11) in the lower defining wall of the load carrier strut (1).

14. The railing bracket as claimed in any of Claims 1 to 13, **characterized in that** the clamping surfaces (23 -25) are formed to define therebetween an accommodation space for the railing (5), said accommodation space being substantially triangular, with the apex facing upwards.

## Patentansprüche

1. Schienenkonsole zur Befestigung einer Lastträgerstrebe (1), die sich quer über ein Fahrzeugdach erstreckt, an sogenannten Schienen (5) (Relingen), die entlang der entgegengesetzten Seitenrandbereiche des Fahrzeugdachs angeordnet sind, und zwei Klemmbacken (3,4) aufweist, die reziprok entlang der Lastträgerstrebe relativ zueinander bewegbar sind unter der Einwirkung einer Klemmvorrichtung, wobei die Klemmbacken Klemmflächen (23-25) für einen Eingriff mit der Schienen (5) haben, und die Klemmvorrichtung entworfen wurde, um die Klemmbacken in optionalen Positionen entlang der Lastträgerstrebe festzustellen, **gekennzeichnet durch** einen Führungsabschnitt (6), der zur Verstellung entlang der Lastträgerstrebe (1) mit der Klemmvorrichtung verbunden ist, und der eine Führungsfläche (7) zum Zusammenwirken mit der einen Klemmbacke (4) hat, so dass diese quer zur Lastträgerstrebe (1) in Richtung auf und in Richtung weg von der Strebe beweglich ist.

2. Schienenkonsole nach Anspruch 1, **dadurch gekennzeichnet, dass** die andere Klemmbacke (3) eine geneigte Fläche (20) aufweist, die sich ungefähr in Längsrichtung der Lastträgerstrebe (1) erstreckt und mit dieser Längsrichtung einen Winkel bildet, wobei die genannte geneigte Fläche angeordnet ist zum Zusammenwirken mit der ersten Klemmbacke (4) und zur Verlagerung derselben quer zur Längsrichtung der Lastträgerstrebe bei beidseitigen Relativbewegungen der Klemmbacken in Längsrichtung der Lastträgerstrebe.

3. Schienenkonsole nach Anspruch 2, **dadurch gekennzeichnet, dass** das Ende der geneigten Fläche (20), das der ersten Klemmbacke (3) zugewandt ist, proximaler zu der Lastträgerstrebe (1) situiert ist als ihr entgegengesetztes Ende.

4. Schienenkonsole nach Anspruch 2 oder 3, **gekennzeichnet dadurch, dass** der Winkel zwischen der geneigten Fläche (20) und der Längsrichtung der Lastträgerstrebe (1) im Bereich von 10-35° liegt.

5. Schienenkonsole nach Anspruch 4, **dadurch gekennzeichnet, dass** der Winkel zwischen der geneigten Fläche (20) und der Längsrichtung der Lastenfördermaschinenverstrebung ungefähr 20° beträgt.

6. Schienenkonsole nach einem der Ansprüche 1 bis 5, **dadurch gekennzeichnet, dass** der Führungsabschnitt (6), in einem horizontalen Querschnitt, etwa eine U-Form aufweist, wobei der untere Teil von dem U eine Stützfläche (7) bildet, gegen die die erste Klemmbacke (4) angelehnt ist und beim Festziehen der Klemmbacken (3 und 4) in Richtung zueinander verschiebbar ist.

7. Schienenkonsole nach Anspruch 6, **dadurch gekennzeichnet, dass** die Stützfläche (7) etwas schräg geneigt ist in Bezug zu einer Normalebene hinsichtlich der Längsachse der Lastträgerstrebe (1), so dass ihr unteres Ende distaler von der zentralen Längslinie des Fahrzeugs situiert ist als ihr oberes Ende.

8. Schienenkonsole nach einem der Ansprüche 6 oder 7, **dadurch gekennzeichnet, dass** die erste Klemmbacke (4) an der Stützfläche (7) durch Ankervorrichtungen in einer wahlweisen Position entlang ihrer Länge (Höhe) zu befestigen ist.

9. Schienenkonsole nach einem der Ansprüche 6 bis 8, **dadurch gekennzeichnet, dass** der Führungsabschnitt (6) und die erste Klemmbacke (4) beidseitig ineinandergreifende Führungsvorrichtungen haben, durch die die Klemmbacke entlang der Stützfläche (7) verschiebbar ist, und die Klemmbacke und der Führungsabschnitt miteinander verbunden sind.

10. Schienenkonsole nach einem der Ansprüche 1 bis 9, **dadurch gekennzeichnet, dass** die Klemmvorrichtung eine Schraube (13) beinhaltet, die in beiden Klemmbacken axial fixiert ist und in Bezug zu beiden Klemmbacken (3,4) drehbar ist, und eine Schraubenmutter (18) in Eingriff mit der Schraube beinhaltet, wobei die Schraubenmutter mit der übrigen Klemmbacke (3 beziehungsweise 4) verbunden ist.

11. Schienenkonsole nach Anspruch 10, **dadurch gekennzeichnet, dass** die Schraubenmutter (18) am Führungsabschnitt (6) befestigt ist.

12. Schienenkonsole nach einem der Ansprüche 1 bis 11, **dadurch gekennzeichnet, dass** die Klemmvorrichtung im Inneren der Lastträgerstrebe angeordnet ist.

13. Schienenkonsole nach Anspruch 11, **dadurch gekennzeichnet, dass** die andere Klemmbacke (3) und der Führungsabschnitt (6) Nackenabschnitte (10 beziehungsweise 16) haben, die an einer langgestreckten Öffnung (11) in der unteren begrenzenden Wand der Lastträgerstrebe (1) platziert sind.

14. Schienenkonsole nach einem der Ansprüche 1 bis 13, **dadurch gekennzeichnet, dass** die Klemmflächen (23-25) so ausgebildet sind, dass sie zwischen sich einen Unterbringungsraum für die Schiene (5) begrenzen, wobei besagter Unterbringungsraum im wesentlichen dreieckig ist und die Spitze nach oben zeigt.

## Revendications

1. Support sur rails pour fixer une barre de porte-bagages (1), s'étendant transversalement sur un toit de véhicule, à des dits rails (5) disposés le long de régions de bords latéraux opposés du toit de véhicule et dans la direction longitudinale du véhicule, et comprenant deux mâchoires de serrage (3, 4) déplaçables en va-et-vient l'une par rapport à l'autre le long de la barre de porte-bagages sous l'action d'un dispositif de serrage, les mâchoires de serrage présentant des surfaces de serrage (23-25) pour venir en prise avec le rail (5), le dispositif de serrage étant conçu pour bloquer les mâchoires de serrage à des positions optionnelles le long de la barre de porte-bagages, **caractérisé en ce qu'**il comprend une partie de guidage (6) qui est connectée, pour son déplacement le long de la barre de porte-bagages (1), au dispositif de serrage et qui présente une surface de guidage (7) pour coopération avec la première mâchoire de serrage (4) de sorte que celle-ci est déplaçable transversalement à la barre de porte-bagages (1) de façon à se rapprocher et s'éloigner de la barre.

2. Support sur rails selon la revendication 1, **caractérisé en ce que** l'autre mâchoire de serrage (3) présente une surface de rampe (20) s'étendant approximativement dans la direction longitudinale de la barre de porte-bagages (1) et faisant un angle avec cette direction longitudinale, la dite surface de rampe étant disposée pour coopération avec la première mâchoire de serrage (4) et son déplacement transversalement à la direction longitudinale de la barre de porte-bagages lors d'un mouvement relatif mutuel des mâchoires de serrage dans la direction longitudinale de la barre de porte-bagages.

3. Support sur rails selon la revendication 2, **caractérisé en ce que** l'extrémité de la surface de rampe (20) en regard de la première mâchoire de serrage (4) est plus proche de la barre de porte-bagages (1) que son extrémité opposée.

4. Support sur rails selon la revendication 2 ou 3, **caractérisé en ce que** l'angle entre la surface de rampe (20) et la direction longitudinale de la barre de porte-bagages (1) est dans la plage de 10 à 35 degrés.

5. Support sur rails selon la revendication 4, **caractérisé en ce que** l'angle entre la surface de rampe (20) et la direction longitudinale de la barre de porte-bagages est de 20 degrés environ.

6. Support sur rails selon une quelconque des revendications 1 à 5, **caractérisé en ce que** la partie de guidage (6) est sensiblement en forme de U en coupe horizontale, le fond du U définissant une surface d'appui (7) contre laquelle la première mâchoire de serrage (4) s'appuie et peut glisser lors du serrage des mâchoires de serrage (3 et 4) l'une vers l'autre.

7. Support sur rails selon la revendication 6, **caractérisé en ce que** la surface d'appui (7) est un peu inclinée obliquement par rapport à une perpendiculaire à la direction longitudinale de la barre de porte-bagages (1) de sorte que son extrémité inférieure est plus éloignée de l'axe longitudinal du véhicule que son extrémité supérieure.

8. Support sur rails, selon une quelconque des revendications 6 ou 7, **caractérisé en ce que** la première mâchoire de serrage (4) peut être fixée, par des moyens d'ancrage, à la surface d'appui (7) dans une position optionnelle sur sa longueur (hauteur).

9. Support sur rails, selon une quelconque des revendications 6 à 8, **caractérisé en ce que** la partie de guidage (6) et la première mâchoire de serrage (4) comportent des moyens de guidage mutuellement en prise, par l'intermédiaire desquels la mâchoire de serrage peut glisser le long de la surface d'appui (7), et la mâchoire de serrage et la partie de guidage sont interconnectées.

10. Support sur rails selon une quelconque des revendications 1 à 9, **caractérisé en ce que** le dispositif de serrage comprend une vis (13), qui est axialement fixée dans une quelconque des mâchoires de serrage (3, 4) et peut tourner par rapport à celle-ci; et un écrou (18) en prise avec la vis, l'écrou étant relié à l'autre mâchoire de serrage (3, 4, respectivement).

11. Support sur rails selon la revendication 10,
**caractérisé en ce que** l'écrou (18) est fixé dans la partie de guidage (6).

12. Support sur rails selon une quelconque des revendications 1 à 11, **caractérisé en ce que** le dispositif de serrage est placé à l'intérieur de la barre de porte-bagages.

13. Support sur rails selon la revendication 11,
**caractérisé en ce que** l'autre mâchoire de serrage (3) et la partie de guidage (6) comportent des régions échancrées (10, 16, respectivement) qui sont placées dans une ouverture allongée (11) de la paroi inférieure de définition de la barre de porte-bagages (1).

14. Support sur rails selon une quelconque des revendications 11 à 13, **caractérisé en ce que** les surfaces de serrage (23 - 25) sont formées de manière à définir entre elles un espace de réception du rail (5), le dit espace de réception étant sensiblement triangulaire avec le sommet tourné vers le haut.
